# EUROPEAN PATENT SPECIFICATION

(11) **EP 2 060 895 B1**
(45) Date of publication and mention of the grant of the patent: **18.01.2012**
(21) Application number: 07022429.0
(22) Date of filing: 19.11.2007
(51) Int. Cl.: G01M 1/02

(54) **Wheelguard for a wheel balancing apparatus**
Radabdeckung für eine Radauswuchtungsvorrichtung
Garde roue et appareil et procédés d'équilibrage de roue

(43) Date of publication of application: 20.05.2009
(73) Proprietor: Snap-on Equipment Srl a unico socio, 42015 Correggio (RE) (IT)
(72) Inventor: Sotgiu, Paolo, 41100 Modena (IT)
(74) Representative: Eisenführ, Speiser & Partner

(56) References cited:
- EP-A- 0 936 398
- EP-A- 1 369 678
- EP-A- 1 617 198
- DE-A1- 3 034 398
- DE-A1- 3 101 843
- US-A- 5 526 686
- US-A1- 2004 020 290

## Description

The present invention relates to a wheelguard for a wheel balancing apparatus, and in particular to a wheelguard to be mounted on the wheel balancing apparatus and having a wheel sensor.

A wheel balancing apparatus or a wheel balancer is known from prior art document EP 0 358 496 A1. According to the technical teaching of this document, a vehicle wheel to be examined is mounted on a coupling plate of the wheel balancer, the coupling plate defining a reference position (reference plane) for the vehicle wheel in conjunction with the rotational axis of the vehicle wheel when mounted. For determining the radius of one or more balance weight receiving locations on the rim of the vehicle wheel, and for determining the distance of each balance weight receiving location from the reference claim (coupling plate) perpendicular to the rotational axis of the vehicle wheel when mounted on the wheel balancer, a sensor arrangement is provided for sensing the rim of the vehicle wheel. The sensors are arranged on a framework which basically has a rectangular shape and which can be pivoted. Specifically, the framework can be pivoted from one side of the vehicle wheel to a working position in which the framework surrounds the wheel. The actual position of the framework is sensed and supplied to a suitable electronic circuitry for further data evaluation of corresponding sensor output signals. Furthermore, the distances are monitored by the sensors and corresponding data are stored in a memory means of the electronic circuitry.

The pivot axis for pivoting the framework is parallel to the rotational axis of the vehicle wheel. The framework can be moved in particular steps and the distances are monitored by the sensors against the corresponding positions of the framework at the intervals of the movement thereof. The movement of the framework is electronically controlled and operation is carried out by a motor which is control-lably driven by the electronic circuitry. A hub rim radius is computed from the wheel periphery radius. Data matching is carried out on the basis of prestored values. On the basis of the data matching the position and mass of the balance weight or plural balance weights are determined.

For protecting an operator from the rotating vehicle wheel and the movement of the framework relative to the rotating vehicle wheel, a hood can be pivoted from a rest position downward to an operational position to cover most of the (rotating) vehicle wheel and the framework surrounding the vehicle wheel. The hood still allows movement of the framework when pivoted in surrounding the vehicle wheel.

The wheel balancer according to the prior art requires a specific mechanical arrangement for both the framework including the sensors and for moving the framework for scanning the wheel completely to obtain the desired detection result, as well as a mechanism for shifting the hood from any rest position to a position where the wheel balancer is under operation and the hood covers an essential portion of the wheel and the moving (scanning) framework.

In addition to both mechanical arrangements for performing and controlling the movement of the framework (including the sensors) and the hood, a user or operator of the wheel balancer according to the prior art must take into account a plurality of predetermined steps to operate the wheel balancer and to first place the framework in the working position and the hood on its final working position for covering at least a portion of the (rotating) vehicle wheel and the operating (pivoting) framework. The application of the hood cannot be omitted due to security reasons and to allow safe operation of the wheel balancer by operating the wheel (rotation) and by moving (i. e. pivoting) the framework according to the necessary scanning operation.

Other wheel balancing appartus is disclosed in DE3034398, US5526686 and DE3101843

It is therefore an object of the present invention to provide a wheelguard which can easily be handled and placed on the wheel to be examined with facilitated operation and a simplified mechanical arrangement while ensuring high safety.

This object is accomplished by a wheelguard for a wheel balancing apparatus as set out according to the appended claims.

The present invention provides a wheelguard for a wheel balancing apparatus for balancing a vehicle wheel, and the wheelguard comprises: a bearing member for pivotally supporting a first lever to allow a rotational movement thereof between a first and a second stable position of the first lever, a supporting frame fixedly connected to the first lever and pivotally supporting a connection rod, a sensor carrier including a wheel sensor for sensing the vehicle wheel, the sensor carrier being fixedly connected to one end of the connection rod, a link arrangement, one end of which being connected to a first connecting point having a fixed positional relationship to the bearing member and the other end being fixedly connected to the other end of the connection rod, wherein the link arrangement rotating the sensor carrier according to a predetermined angle, when the first lever rotates from the first stable position to the second stable position thereof, and the vehicle sensor sensing the vehicle wheel when the sensor carrier is rotated according to the predetermined angle.

Hence, according to the present invention, the movement of the sensor carrier can easily be controlled in conjunction with the movement of the cover portion simultaneously when the cover portion is moved from its rest position to its working position. The sensor carrier and more specifically the sensor arranged on the sensor carrier are moved in a manner to pass the vehicle wheel from a position outside the vehicle wheel to a position near the wheel hub, so that the essential portions of the vehicle wheel including the tyre, the rim and the hub can be scanned by the sensor, and the mechanical arrangement and further properties thereof can be detected. Specifically, from the basic data about the vehicle wheel obtained during the scanning movement of the sensor carrier in conjunction with the movement of the cover portion, the position and the mass of a balance weight for a particular vehicle wheel can be determined or calculated.

The present invention exhibits the following advantages. The arrangement according to the present invention provides a simplified mechanism for moving and guiding (positioning) both the sensor carrier in view of its scanning movement (sensor trajectory) as well as the movement of the cover portion from the rest position to the working position. The combination of the movement of the cover portion and the movement of the sensor carrier provides a correlated movement of both means. An easy operation of the wheelguard is ensured as when shifting the cover portion from the reset position to the working position, the movement of a sensor carrier is automatically carried out. That is, the sensor carrier movement automatically follows in a predetermined manner the movement of the cover portion.

The user of the wheel balancing apparatus having the wheelguard according to the present invention being mounted to the wheel balancing apparatus, can easily operate the wheel balancing apparatus by only concentrating on the movement of the cover portion of the wheelguard from its rest position to the working position, and there is no need to specifically deal with the movement of the sensor carrier for correctly positioning in a predetermined manner the sensor for scanning the vehicle wheel, thereby reducing workload of the operator of the wheel balancing apparatus.

The simplified mechanical arrangement with automatic operation of the movement of the sensor carrier facilitates handling of a wheel balancing apparatus while precise and reliable detection results are still ensured. The mechanism can easily be adapted to specific kinds of wheels and in particular to wheels of different diameter and different types and sizes of tyres.

Due to the facilitated operation of the wheelguard and the few manual operations necessary to be carried out by the user or operator, the wheel balancing apparatus including the wheelguard according to the present invention can be operated with a high safety level.

Further developments are laid out in the corresponding dependent sub claims.

Preferably the link arrangement includes a second lever pivotally connected to the first connecting point, and a third lever being pivotally connected to the second lever at a second connecting point and being fixedly connected to a third connecting point with the connection rod. Moreover, the supporting frame may pivotally support the sensor carrier and the link arrangement interconnected by the connection rod, and the rotation of the sensor carrier according to the predetermined angle is a movement relative to the supporting frame.

The rotation of the sensor carrier is a rotation about a rotation axis defined by the connection rod, the rotation axis being parallel to the pivot axis of the first lever. A cover portion may be slidingly supported in the supporting frame for carrying out a sliding movement between a first and a second stable position thereof.

Preferably, the first stable position of the first lever and the first position of the cover portion correspond to a reset position, and the second stable position of the first lever and the second stable position of the cover portion correspond to a working position.

The sensor carrier may be a bar-shaped member being on one end thereof fixedly connected to the connection rod and carrying on the other end thereof the wheel sensor. According to a preferred development, the wheel sensor is an ultrasonic sensor.

In the working position the cover portion can partly cover the vehicle wheel to be examined.

Preferably, the movement of the wheel sensor corresponds to a predetermined spatial trajectory resulting from the rotation of the first lever from its first stable position to its second stable position and the rotation of the sensor carrier according to the predetermined angle. The spatial trajectory of the wheel sensor can result from the rotation of the first lever superimposed by the rotation of the sensor carrier according to the predetermined angle, performed simultaneously.

The wheel sensor may generate sensor signals indicative of the vehicle wheel to be examined, and the sensor signals can be fed to a central control means included in the wheel balancing apparatus.

It is further preferred that a driving member is provided which is pivotally connected to the first lever for rotating the first lever about the pivot axis of the bearing member.

The foregoing and other objects, features and advantages of the present invention will become more apparent from the following detailed description in conjunction with the appended drawings referring to embodiments of the present invention.

The drawings according to the present invention show in
Fig. 1 an overall view of the wheelguard according to an embodiment of the present invention in both a first position and a second position,
Fig. 2 a side view of the wheelguard according to the present invention being placed in the first position,
Fig. 3 a side view of the wheelguard according to the present invention being placed in the second position,
Fig. 4 the wheelguard being placed in the first position as viewed from a rotational axis of the vehicle wheel to be examined, and
Fig. 5 a schematic block diagram of a circuitry for carrying out control and data evaluation according to the present invention.

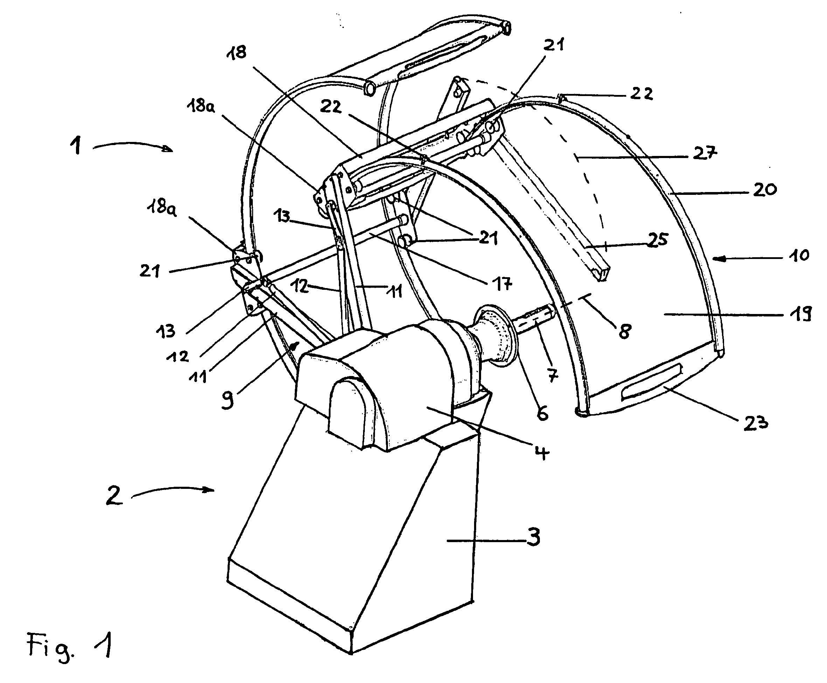

The mechanical arrangement of a wheelguard of the present invention will be described in greater detail in conjunction with the disclosure of Figs. 1 to 4.

Fig. 1 shows an overall view (perspective view) of the wheelguard 1 for a wheel balancing apparatus 2, the wheelguard 1 being mounted to the wheel balancing apparatus 2.

The wheel balancing apparatus 2 comprises a basic element 3 (pedestal) on which a housing 4 is arranged or supported. The housing may include an electric motor and a gear mechanism or a gear mechanism (both elements not shown) or may include a gear mechanism having the electric motor separated there from. The electric motor (not shown) serves for turning or rotating a vehicle wheel 5 which is to be examined, to obtain the required information to finally determine the mounting position of a wheel balance (not shown) as well as a weight thereof. The present invention is, however, not limited to the application of an electric motor since any suitable actuator or drive means may be used, being for example based on hydraulic or pneumatic operation.

For mounting the vehicle wheel 5 the wheel balancing apparatus 2 comprises (usually in conjunction with the electric motor and the gear transmission, both not shown) a mounting means 6 upon which the vehicle wheel 5 to be examined is mounted to the wheel balancing apparatus 2 and is fastened thereto with screws or a predetermined fastening mechanism (lock). The mounting means 6 includes a shaft 7 relative to which the vehicle wheel 5 can be centered.

When the vehicle wheel 5 is correctly mounted to the mounting means 6 and is rotated by the electric motor (not shown), the rotation obtained has its rotational axis 8 identical to a central axis of the shaft 7.

That is, for bringing the vehicle wheel 5 to be examined into a position ready for examination and for detecting the necessary basic data for balancing the vehicle wheel 5, the vehicle wheel 5 has to be mounted to the mounting means 6 on the shaft 7, and since both the shaft 7 and the mounting means 6 are rotatably mounted in the housing 4 and can be driven by the electric motor (not shown), the vehicle wheel 5 coupled to the mounting device 6 is rotated in a controlled and predetermined manner.

Regarding the arrangement of the wheelguard 1 relative to the wheel balancing apparatus 2, the wheelguard 1 is mounted to the wheel balancing apparatus 2 by means of a drive mechanism 9.

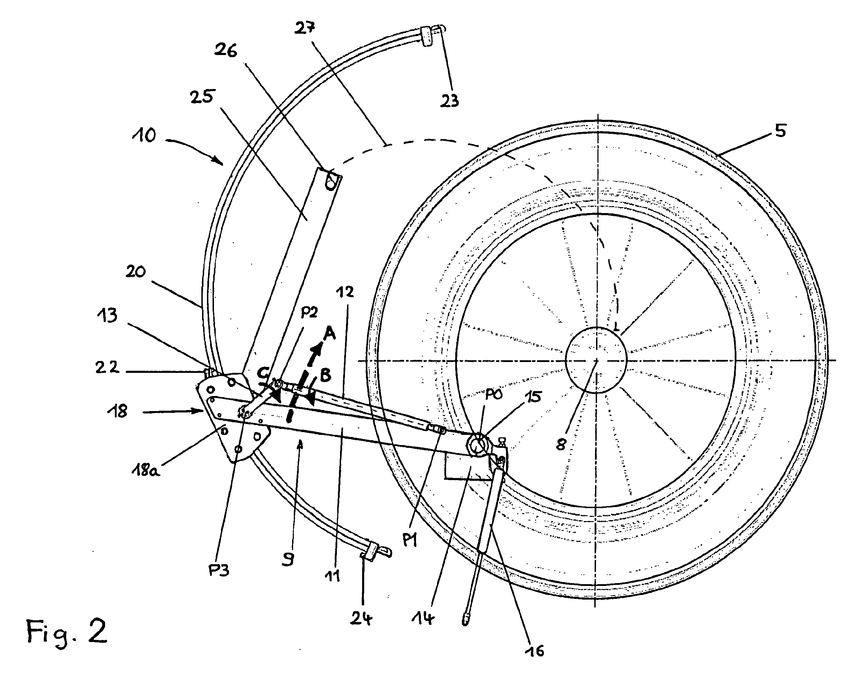

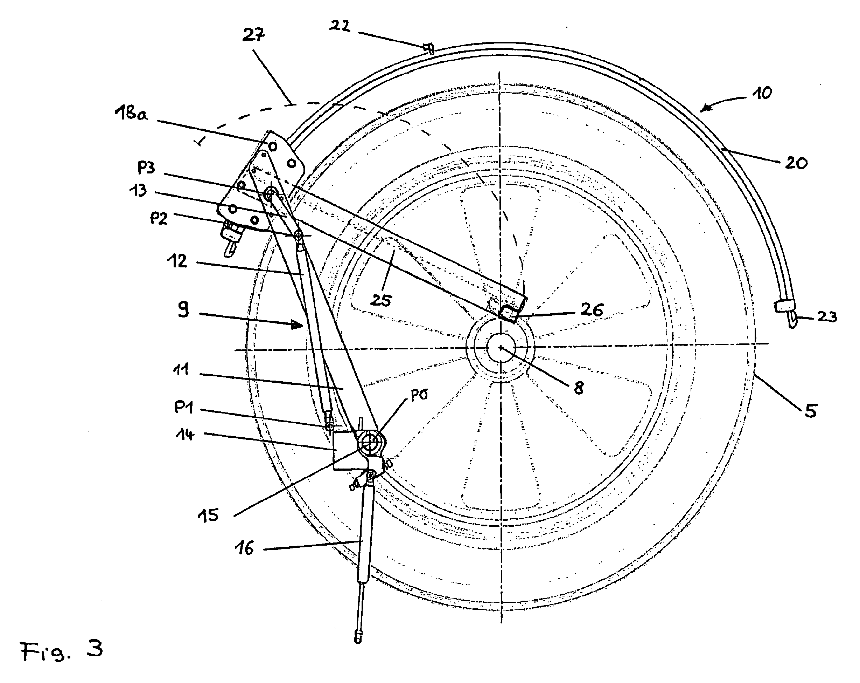

The drive mechanism 9 is provided for moving in a predetermined manner a cover portion 10 from its rest position (Figs. 1 and 2) which is a first position, to a working position (Figs. 1 and 3) which is a second position, and back to the rest position (first position).

As is shown in Figs. 2 and 3 in greater detail, the drive mechanism 9 consists of a first lever 11, a second lever 12 and a third lever 13. The first, second and third lever 11 to 13 are interconnected as follows. The first lever 11 which is a main lever for carrying or supporting the cover portion 10 and is pivotally supported by a bearing member 14, and can carry out a rotational movement about a pivot axis 15 near an end portion of the first lever 11 more closer to the rotational axis 8 of the vehicle wheel 5. The larger portion of the first lever 11 extends from the bearing member 14 away from the rotational axis 8 of the vehicle wheel 5, whereas a smaller portion of the first lever extends in the opposing direction. At the end of the first lever 11 closer to the bearing member 14, a driving member 16 is connected to the first lever in a movable manner (pivotally) to exert a force on the first lever 11 for moving the first lever 11 in a rotational manner about the pivot axis 15 and supported by the bearing member 14.

The pivot axis 15 at the bearing member 14 defining the rotational axis of the first lever 11 constitutes the main connecting point P0.

The second lever 12 is connected at its one end to the bearing member 14 by means of a first connecting point P1. The first connecting point P1 and the main connecting point P0 have a predetermined (fixed) positional relationship to each other. The invention is not limited to the connection of the second lever 12 to the bearing member 14 at the first connecting point P1. The essential condition for fixing the second lever 12 at the first connecting point P1 is that the first connecting point P1 and the main connecting point P0 must have said fixed positional relationship to each other.

The other end of the second lever 12 is pivotally connected at a second connecting point P2 with the third lever 13, the first connecting point P1 forming a pivotal connection between the second lever 12 and the third lever 13. Moreover, at a third connecting point P3 the other end of the third lever 13 is fixedly connected to a connection rod 17 which is pivotally supported by each of both sidewalls 18a and 18b of a supporting frame 18. The third lever 13 can apply a torque on the connection rod 17 for rotation thereof. The second and third lever 12 and 13 form a link arrangement for providing to the connection rod 17 a controlled rotation.

For forming a linkage on the basis of the first lever 11, the second lever 12 and the third lever 13 in connection with the bearing member 14, the connection rod 17 is also pivotally connected to the first lever 11, the first lever 11 being fixedly attached to the sidewall 18a of the supporting frame 18. In particular, the supporting frame 18 and the first lever 11 cannot provide a movement relative to each other, whereas at the third connecting point P3 the third lever 13 is fixedly connected to the connection rod 17, and the connection rod 17 is pivotally supported by the supporting frame 18 so that in conjunction with the movement of the second lever 12 and the third lever 13 the connection rod 17 can be rotated and the rotational angle thereof can be determined by the movement of the second and third lever 12 and 13 relative to each other. The rotational axis of the connection rod 17 extends parallel to the rotational axis 8 of the vehicle wheel 5, in a similar manner as the pivot axis 15 of the bearing member 14. That is, the movement of the first to third lever 11 to 13 and also the arc-shaped movement of the supporting frame 18 fixedly connected to the first lever 11 is effected in a plane which is basically perpendicular to the rotational axis 8 of the vehicle wheel 5.

The first to third lever 11 to 13 in conjunction with the bearing member 14 constitute a non-Grashof linkage (articulated quadrilateral, fourbar linkage), and when the first lever 11 is moved, for example, by applying a rotational force (torque) by the driving member 16 at the one end of the first lever 11 adjacent to the pivot axis 15 of the bearing member 14 where the first lever 11 is pivotally supported, the first lever 11 constitutes the input link of the fourbar linkage and causes a certain predetermined movement of the second an third lever 12 and 13 and, thus, a predetermined rotation of the connection rod 17 fixedly connected to the third lever 13 at the third connecting point P3. The fixed or constant relationship between the pivot axis 15 (main connecting point P0) of the bearing member 14 and the first connecting point P1 of the second lever 12 constitutes the fourth link of the above fourbar linkage.

It is in this connection to be noted that the first connecting point P1 shown in Fig. 2 is arranged according to a fixed relationship to the bearing member 14 and is not connected to the first lever 11. More specifically, the relative movement between the first lever 11 and the second lever 12 when the first lever 11 is rotated about the pivot axis 15, is shown in Fig. 3 wherein the relationship between the pivot axis 15 (main connecting point P0) and the first connecting point P1 is maintained and corresponds to the presentation of points P0 and P1 in Fig. 2.

Regarding the movement of the fourbar linkage based on the first to third lever 11 to 13 and the bearing member 14, the position of the first lever 11 as shown in Fig. 2, which is identical to the position of the first lever 11 shown in Fig. 1 (left side), constitutes a rest position (first position) of the first lever 11 and the supporting frame 18 connected thereto. The positions of the second and third lever 12 and 13 correspond to the presentation in Fig. 2. That is, all elements of the wheelguard 1 are in their rest position or first position.

In case an attracting force is applied by the driving member 16 connected to the first lever 11 near the pivot axis 15, the first lever is rotated so that the larger portion of the first lever 11 on the left hand side of the pivot axis 15 (main connecting point P0) moves upward. Due to the connecting conditions (connecting points P1 to P3) the second and third lever 12 and 13 simultaneously move in the same direction on an arc-shaped trajectory corresponding to the movement of the first lever 11. However, since the first connecting point P1 is fixedly located in conjunction with the bearing member 14, both the second and third lever 12 and 13 carry out a movement relative to the first lever 11 to reach a final position as shown in Fig. 3. That is, the first connecting point P1 is traversed by the first lever 11 the larger portion of which is moved upward and rotated about the pivot axis 15 (main connecting point P0).

The angular position of the supporting frame 18 fixedly connected to the first lever 11 and inhibiting any relative movement between the supporting frame 18 and the first lever 11, corresponds to the rotational movement of the first lever 11. That is, the supporting frame 18 carries out a rotational movement about the pivot axis 15, the portion of the first lever 11 from the main connecting point P0 to the third connecting point P3 defining the radius of this rotational movement.

Thus, the first lever 11 which constitutes the input lever of the fourbar linkage can be moved between two stable positions (i. e. two operational positions), such as the rest position (first position, Fig. 2) and the final position (second position, Fig. 3) which is the working position of the wheelguard 1 according to the present invention. Moreover, each element of the wheelguard 1 has its own first and second stable position. As is shown in Figs. 1 to 3, the wheelguard 1 according to the present invention further comprises the cover member as mentioned above, which is connected to the supporting frame 18. More specifically, the cover portion 10 comprises an arc-shaped cover sheet 19 and an arc-shaped framework 20 for supporting the arc-shaped cover sheet 19, thereby forming a segment of a circle. The arc-shaped framework 20 comprises at both ends of the cover portion 10 a handle piece 23 which allows an operator to manually operate the cover portion 10, i.e. to manually move the cover portion 10 of the wheelguard 1.

The arc-shaped framework 20 of the cover portion 10 is slidingly supported and guided in the supporting frame 18. To this end, at the inner side of the sidewalls 18a and 18b of the supporting frame 18, a plurality of rollers 21 is provided to slidingly guide the arc-shaped framework 20 of the cover portion 10. The sliding movement of the cover portion 10 in the supporting frame 18 is basically independent from any angular position of the supporting frame 18 due to a possible movement of the first lever 11 between the two stable end positions (rest position according to Fig. 2 and working position according to Fig. 3).

When the first lever 11 is located at its rest position as is shown in Figs. 1 and 2, the slidingly supported and guided cover portion 10 can slide downward due to the arrangement of rollers 21 at both sidewalls 18a and 18b of the supporting frame 18. The arc-shaped framework 20 comprises a first stopper 22 on each side of the arc-shaped framework 20, so that the downward movement of the cover portion 10 when the rest position (Fig. 2) is reached, is limited. That is, the cover portion 10 slides downward in the supporting frame 18 by means of the plurality of rollers 21 until the stopper 22 on both sides of the arc-shaped framework 20 reaches the supporting frame 18. Hence, by means of the first stopper 22 the sliding movement of the cover portion 10 is stopped at a predetermined position and also the cover portion 10 reaches a stable position at the rest position (Fig. 2).

When a rotating force (torque) is applied to the first lever 11, probably by means of the driving member 16, as mentioned above, the larger portion of the first lever 11 moves upward, and so that the supporting frame 18 fixedly connected to the first lever 11. When the supporting frame 18 follows the movement of the first lever 11, the cover portion 10 slidingly supported and guided by the supporting frame 18 follows the movement of the supporting frame 18 due to the fact that the stopper 22 abuts on the supporting frame 18 (Fig. 2).

When the first lever 11 continues its rotational movement about the pivot axis 15 until the other stable position (working position, second position) is reached (Fig. 3), then the cover portion 10 can be further extracted from the supporting frame 18 until a second stopper 24 abuts on the opposite side of the supporting frame 18 (Fig. 3). Hence, during the movement of the first lever 11 from the rest position (first stable position) to the working position (second stable position) the cover portion 10 can move by a sliding movement guided by the supporting frame 18 by a predetermined angular range defined by the respective positions of the first and second stoppers 21 and 24 on the arc-shaped framework 20 of the cover portion 10.

That is, the cover portion 10 can be moved slidingly in the supporting frame 18 within the range defined by the first and second stoppers 22 and 24. Thus, the cover portion 10 is slidingly supported for carrying out a movement between two stable positions. It is to be noted that this movement is independent from the movement of the first lever 11 and the supporting frame 18 fixedly connected to the first lever 11, but the supporting frame 18 and the cover portion 10 held by the supporting frame 18 move together with the first lever 11. Due to the influence of gravity acting on the cover portion 10, in the first stable position which corresponds to the rest position (Fig. 2) the cover portion 10 will reach a stable position having the first stoppers 22 abutted on the supporting frame 18.

In addition to the above explanations regarding the wheelguard 1 according to the present invention, there is arranged at the further sidewall 18b of the supporting frame 18 a sensor carrier 25 in the form of a bar-shaped element which is fixedly connected adjacent to the further sidewall 18b of the supporting frame 18 and which is further fixedly connected to the connection rod 17 rotatably supported by the supporting frame 18. That is, the connection of the connection rod 17 to the sensor carrier 25 does not allow any relative movement between these two elements.

When the rest position, that is, the first stable position of the drive mechanism 9, the supporting frame 18 and the cover portion 10 is considered, the sensor carrier 25 extends from the connection to the connection rod 17 away from the supporting frame 18 and is arranged at a spatial position close to the arc-shaped framework 20 of the cover portion 10. That is, in the rest position (Fig. 2) an angle between the stable position of the sensor carrier 25 and the first lever 11 is a predetermined angle which is fixed due to the connecting conditions provided by the fourbar linkage of the drive mechanism (elements 11 to 14).

While at one end of the bar-shaped sensor carrier 25 a fixed connection is provided to the connection rod 17, a sensor 26 is arranged at the other end of the sensor carrier 25, which constitutes the front end or distal end thereof.

The sensor 26 arranged on the sensor carrier 25 may be provided in the form of an ultrasonic sensor and may include in general transmitter means for sending a measurement wave to a target, provided in the present case in the form of the vehicle wheel to be examined, and a receiving means for receiving a resulting wave based on said measurement made and being modified (by reflection) according to the properties and arrangements (shape and position) of the vehicle wheel 5. The receiving means included in the sensor 26 may be adapted for generating corresponding signals indicative of the properties and dimensions of the vehicle wheel 5 to be examined and may be arranged to transmit the detection signal to a general data evaluation means.

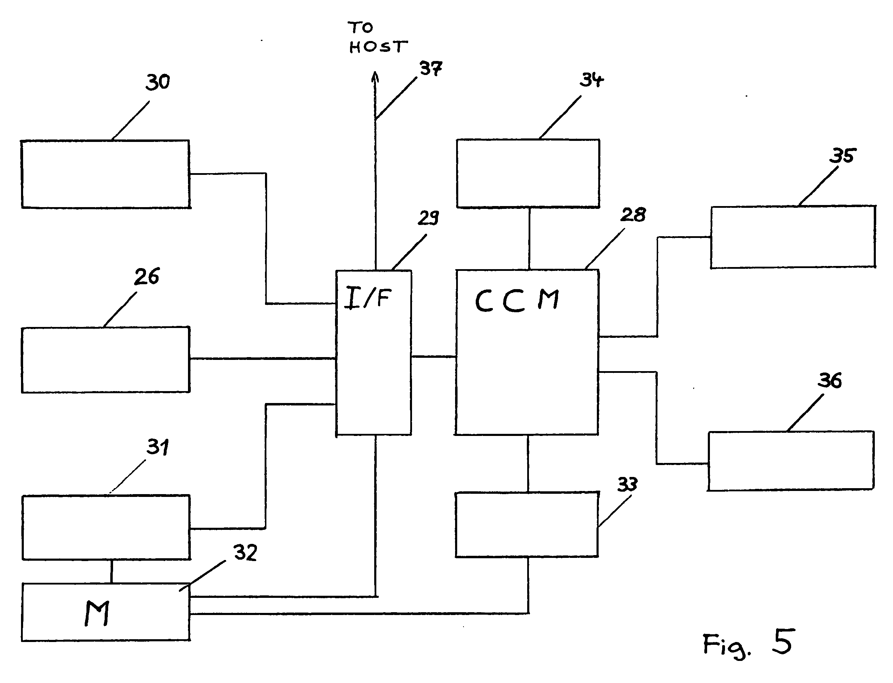

Such a general data evaluation means can be provided in the form of a central control means (CCM) which forms part of a suitable circuitry to provide the data evaluation and the control and which will be described hereinafter in conjunction with Fig. 5.

The present invention is not limited to the sensor arrangement as mentioned above. Instead of one particular sensor such as sensor 26, plural sensors may be provided for sensing the vehicle wheel 5 to be examined, and plural signals can be generated, each of these signals or the plural signals together representing the properties and shape of the vehicle wheel 5.

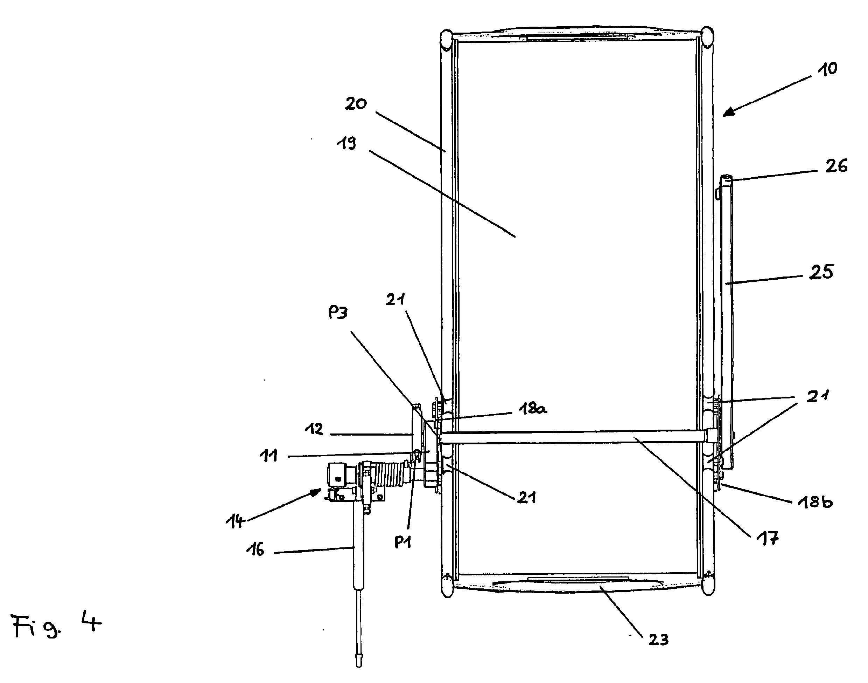

In this connection, Fig. 4 shows the arrangement of the wheelguard 1 according to the present invention as seen from the vehicle wheel 5 when mounted to the wheel balancing apparatus 2. The cover portion 10 is located in its first position. As can in addition be seen from Fig. 4, on the rear side of the vehicle wheel 5 to be examined and mounted to the mounting device 6 and the shaft 7, the supporting elements such as the first to third levers 11 to 13 are arranged, and in a plane parallel to the front of the vehicle wheel 5 the sensor carrier 25 is arranged. The width of the tyre or the complete vehicle wheel 5 is traversed (bridged) by the supporting frame 18 slidingly supporting the cover portion 10.

Since the sensor carrier 25 (having at its distal end the wheel sensor 26) is moved in a predetermined manner as the first lever 11 moves, i.e. when the first lever 11 rotates from its rest position (Fig. 2) to an upward position, the movement of the sensor carrier 25 and specifically the distal end thereof (including the wheel sensor 26) carries out a spatial movement curve having an arc-shaped trajectory 27 and consists of a rotational movement due to the fact that the sensor carrier 25 is fixed to the supporting frame 18 connected to the first lever 11, and a further movement forming a rotational movement about the axis of the connecting rod 17 and being rotated by the operation of the drive mechanism 9 when the first lever 11 rotates from its rest position (first position, Fig. 2) to its position of operation (second position, Fig. 3). This movement along the arc-shaped

The spatial movement curve of the distal end of the sensor carrier 25 including the wheel sensor 26 is shown in Figs. 2 and 3 by an arc-shaped dashed line. As can be seen from the context of Figs. 1 to 3, that is, from the arc-shaped dashed line constituting the trajectory 27 of the sensor 26, in conjunction with the movement of the sensor carrier 25 as shown in Figs. 2 and 3 and both end positions of the wheelguard 1 in a perspective view in Fig. 1 the wheel sensor 26 is moved on the spatial trajectory 27 which allows scanning of the complete vehicle wheel 5 to be examined and mounted to the mounting means 6, including the tyre of the vehicle wheel 5 as well as the rim and the hub thereof. Therefore, while moving the wheelguard 1 according to the present invention in the manner as described above, the wheel sensor 26 due to the mechanical arrangement of the wheelguard 1 performs a predetermined movement (arc-shaped trajectory 27, Figs. 2 and 3) so that the vehicle wheel 5 to be examined can be scanned in its entirety.

That is, the movement of the sensor carrier 25 and, thus, the arc-shaped trajectory 27 of a wheel sensor 26 starts outside the wheel diameter (just when the first lever 11 has started its rotational movement beginning from the rest position or first position, Fig. 2) and ends close to the center of the vehicle wheel 5 to be examined, i.e. near the hub thereof, forming the second stable position. In more detail, when the first lever 11 is located in its first stable position (rest position, Fig. 2) the other members such as, for example, the cover portion 10 , the link arrangement 12 and 13 and the sensor carrier 25 are in their respective first stable position, and when the first lever 11 is positioned in its second stable position (Fig. 3), the other elements above are in the respective second stable position.

Preferably, the moving plane of the first lever 11 is basically parallel to the moving plane of the sensor carrier 25, and both planes are basically perpendicular to the rotational axis defined by the connection rod 17, the pivot axis 15 of the bearing member 14 supporting the first lever 11 and the rotational axis of the vehicle wheel 5. Furthermore, preferably the parallel moving planes of the first lever 11 and the sensor carrier 25 are basically parallel to the adjusted rotational plane of the vehicle wheel 5 to be examined.

Due to the mechanical arrangement of the wheelguard 1 according to the present invention the drive mechanism 9 is operated and moved behind the rear side of the vehicle wheel 5, whereas the sensor carrier 25 including the wheel sensor 26 is moved in a plane vertical to the rotational axis 8 of the vehicle wheel 5 and lying at the front side of the vehicle wheel 5. During the movement of the sensor carrier 25 the wheel sensor 26 passes in front of the vehicle wheel 5 for obtaining, by scanning, information signals about the properties of the vehicle wheel 5.

The rotational axis of the wheelguard 1 which is the pivot axis 15 of the bearing member 14 (to which a first lever 11 is pivotally supported), is substantially parallel to the rotational axis 8 of the vehicle wheel 5 to be examined, and both rotational axes are located adjacent to each other separated by a predetermined distance, i.e. spaced a part from each other as is shown in Figs. 2 and 3.

Furthermore, a sensor means in the form of a rotational encoder, transducer or potentiometer or the like can be mounted to the bearing of the wheelguard 1 (i. e. at the bearing member 14) to allow checking or monitoring of the movement and specifically the actual rotational position (angle) of the wheelguard 1 (i. e. of the first lever 11). This sensing means may be considered to constitute a position sensor of the drive mechanism 9, that is, this sensor means can provide detection signal indicative of the positional relationship of the drive mechanism 9 relative to the bearing member 14. Specifically, from the exactly determined position of the drive mechanism 9 (mainly the rotational position of the first lever 11), the angular position of the sensor carrier 25 and the vehicle sensor 26 can be determined. Since there is by means of the drive mechanism 9 and the connection rod 17 of the supporting frame 18 a fixed positional relationship between the position of the drive mechanism 9 and the sensor carrier 25, the angular position of the first lever 11 as detected forms a basic information for the angular position of the sensor carrier 25. The precision of these data only depends on mechanical tolerances of the drive mechanism 9 and the resolution of the rotational or angle decoder in the sensor means at the bearing member 14.

The sensor means may include a sensor provided in the form of a switch for detecting the movement of the first lever 11 away from its rest position (Fig. 2), and may further include a transducer in the form of a rotational encoder (angle encoder) to detect the angular position of the first lever 11 and, thus, of the sensor carrier 25 and the wheel sensor 26. Therefore, the output signals of the sensor means at the bearing member 14 is also indicative of the actual position of the sensor carrier 25 and the sensor 26 when moving at the spatial arc-shaped trajectory 27 in front of the front side of the vehicle wheel 5 to be examined.

The sensor arrangement as mentioned above may serve for automatically switch on driving (rotating) of the vehicle wheel 5 to be examined when the wheelguard 1 according to the present invention has reached the working position (second position, Fig. 3) for determining the balance weight and mounting position thereof. When the wheelguard 1 has reached the working position the vehicle wheel 5 is protected by the cover portion 10 as is shown in Fig. 3.

The data evaluation concept according to the present invention is explained in the following with reference to Fig. 5.

Fig. 5 shows a central control means (CCM) 28 which is mainly composed of a microcomputer and arranged for running a predetermined software, providing data evaluation and data matching, as well as providing control of the entire wheelguard 1.

The central control means 28 is connected to an interface I/F 29 which may also include an analogue-to-digital converter for converting analogue signals input to the interface 29 into corresponding digital signals ready for data evaluation by the central control means 28.

The interface 29 receives signals from the sensor means in form of a transducer 30 arranged at the bearing member 14 and detecting the angular movement of the first lever 11. Moreover, the interface 29 is connected to the wheel sensor 26 arranged on the sensor carrier 25 for detecting the properties of the vehicle wheel 5 to be examined.

Specifically, this sensor may detect the shape of the vehicle wheel including the tyre, the rim and the hub, when the sensor 26 is moved over the vehicle wheel 5 in the plane perpendicular to the rotational axis 8 of the vehicle wheel 5. Detection the vehicle wheel 5 can be performed relative to a reference plane which is basically perpendicular to the rotational axis 8 of the vehicle wheel 5. It may be determined the radius and the width of the vehicle wheel 5, and corresponding signals are generated and are fed to the interface 29. A sensor 32 constitutes an operation sensor for detecting the rotation and the rotational speed of the vehicle wheel, that is, the operation sensor 31 is provided at the shaft 7 or at the mounting means 6 for mounting the vehicle wheel 5. The mounting means 6 and the shaft 7 are arranged in operational connection to a motor 32 for driving the vehicle wheel, i.e. for rotating the vehicle wheel during the balancing operation.

The motor is controlled by the central control means 28. To this end, the central control means 28 is connected to a motor driver 33 which is connected to the motor 32 to supply the motor with current signals under control of the central control means 28.

The central control means 28 is further connected to a memory means 34 for storing therein any software for the operation of the wheelguard 1 according to the present invention and the specific operation of the central control means 28, as well as data indicative of known vehicle wheels and properties thereof. A display means 35 is connected to the central control means 28 to show the user the actual operating conditions of the wheelguard 1. The user can effect control of the operation of the wheelguard 1 by inputting corresponding instructions to the central control means 28 by an input means 36 (usually provided in the form of a keyboard) connected to the central control means 28. In case the wheel balancing apparatus 2 including the wheelguard 1 according to the present invention should be controlled by an external computer such as a host computer, a connection line 37 is provided to such a host computer for exchanging data and software.

When the sensor signals of the transducer 30, the wheel sensor 26 and the operation sensor 31 are fed to the interface 29 and are input to the central control means 28, the data are evaluated and data matching is performed in conjunction with data read from the memory means 34. The operation of the central control means 28 includes data evaluation, calculation of data matching, control of storage of data, control of the display means 35 and receiving instructions input by the input means 36, and operating the wheel balancing apparatus as set by the user and/or according to a predetermined program or instructions transmitted by host computer.

Finally, when the detection signals of the wheel sensor 26 have been processed, measurement can be performed with the rotating vehicle wheel 5. The balance weight (mass) and the distance of the balance weight receiving location (mounting location) with respect to any reference plane, rotational axis or any fixed position is determined or calculated.

The operation of the wheel balancing apparatus including the wheelguard 1 according to the present invention can be carried out upon a user instruction in an automatic manner, i.e. an actuator, which may be provided in the form of an electric or hydraulic drive means as the driving member 16 can be provided to the bearing member 14 to drive the first lever 11 in a manner so that a specific scanning to be performed by sensor 26 can be carried out. A corresponding actuator can also be controlled by the central control means 28 according to a predetermined program.

The wheel balancing apparatus 2 can also be operated in a manual manner by initiating the measurement system and by manually operating the wheelguard 1 by the user, thereby initiating and starting the measurement process and data evaluation. To this end, the user can grip the handle piece 23 at both ends of the cover portion 10 of the wheelguard 1 and can manually draw the cover portion 10 from the rest position (Fig. 1) to the operation position (Fig. 3).

In the case of a manual operation of the wheelguard 1 of the present invention the sensor means arranged at the bearing member 14 can output a signal when the first lever 11 is moved (pivoted) up from its rest position to initiate the scanning operation by the wheel sensor 26 when moving along the trajectory 27. Furthermore, when the first lever 11 and, thus, the cover portion 10 and the sensor carrier 25 reach their working position (second position), a signal for initiating rotation of the vehicle wheel 5 to be examined can be output to thereby start measurement of the balancing weight and corresponding mounting position. When the cover portion 10 is manually moved the cover portion 10 slides in the supporting frame 18 as described above.

The wheelguard 1 according to the present invention for a wheel balancing apparatus 2 provides the following advantages.

The wheelguard 1 of the present invention is provided on the basis of a simplified mechanical arrangement, and in particular a mechanical arrangement in the form of the drive mechanism 9 for both moving the cover portion 10 and the sensor carrier 25. The cover portion 10 is moved on a circular trajectory, since the cover portion 10 is only slidingly supported by the supporting frame 18. In contrast thereto, the sensor carrier 25 and the sensor 26 carry out a movement which is superimposed by a further rotational movement of the sensor carrier 25 caused by the mechanical arrangement of the drive mechanism 9, and in particular by the arrangement of the second and third levers 12 and 13 and the connection of the third lever 13 to the connection rod 17. The combination of the cover portion 10 and of the sensor carrier 25 provide a correlated movement of both elements according to a predetermined and precise manner.

Preferably, the movement of the wheel sensor 26 corresponds to a predetermined spatial trajectory 27 resulting from the rotation of the first lever 11 from its first stable position to its second stable position, and the rotation of the sensor carrier 25 according to the predetermined angle (superimposed movement). That is, the spatial trajectory 27 of the wheel sensor 26 results from the rotation of the first lever 11 superimposed by the rotation of the sensor carrier 25 according to the predetermined angle and performed simultaneously.

During the application of the cover portion 10, i.e. during shifting the cover portion 10 from the rest position to the working position measurement (scanning of the vehicle wheel 5) can be carried out. This leads to an easy operation of the wheelguard 1 of the wheel balancing apparatus as when shifting the cover portion 10 from the rest position (Fig. 2) to the working position (Fig. 3), the sensor carrier 25 including the sensor 26 follows automatically and precisely according to a predetermined movement which is a movement according to the arc-shaped trajectory 27 ensuring complete and reliable scanning of the vehicle wheel 5 to be examined.

When the motor 32 which may be provided in the form of an electric motor, is controlled by the central control means 28 and the vehicle wheel 5 rotates, the cover portion 10 is located in its working position (Fig. 3), and the user of the wheel balancing apparatus is protected by the wheelguard 1 according to the present invention against unintentional touch of the rotating vehicle wheel 5.

While the invention has been illustrated and described in detail in the drawings and the foregoing description, such illustrations and description are to be considered illustrative or exemplary and not restrictive. The invention is not limited to the disclosed embodiments, and the reference numbers shown in the drawings and referred to in the description do not limited the scope of the present invention.

## Claims

1. Wheelguard (1) for a wheel balancing apparatus (2) for balancing a vehicle wheel (5), the wheelguard (1) comprising:
a bearing member (14) for pivotally supporting a first lever (11) to allow a rotational movement thereof between a first and a second stable position of the first lever (11),
a supporting frame (18) fixedly connected to the first lever (11) and pivotally supporting a connection rod (17),
a sensor carrier (25) including a wheel sensor (26) for sensing said vehicle wheel (5), the sensor carrier being fixedly connected to one end of said connection rod (17),
a link arrangement (12, 13), one end of which being connected to a first connecting point (P1) having a fixed positional relationship to said bearing member (14) and the other end being fixedly connected to the other end of said connection rod (17),
wherein said link arrangement (12, 13) rotating said sensor carrier (25) according to a predetermined angle, when said first lever (11) rotates from said first stable position to said second stable position thereof, and said vehicle sensor (26) sensing said vehicle wheel (5) when said sensor carrier (25) is rotated according to said predetermined angle.

2. Wheelguard according to claim 1, wherein said link arrangement (12, 13) includes a second lever (12) pivotally connected to said first connecting point (P1), and a third lever (13) being pivotally connected to said second lever at a second connecting point (P2) and being fixedly connected to a third connecting point (P3) with said connection rod (17).

3. Wheelguard according to claim 1, wherein said supporting frame (18) pivotally supports said sensor carrier (25) and said link arrangement (12, 13) interconnected by said connection rod (17), and said rotation of said sensor carrier (25) according to said predetermined angle is a movement relative to the supporting frame (18).

4. Wheelguard according to one of claims 1 to 3, wherein said rotation of said sensor carrier (25) is a rotation about a rotation axis (8) defined by said connection rod (17), said rotation axis being parallel to the pivot axis (15) of said first lever (11).

5. Wheelguard according to claim 1, further including a cover portion (10) being slidingly supported in said supporting frame (18) for carrying out a sliding movement between a first and a second stable position thereof.

6. Wheelguard according to claim 1 or 5, wherein said first stable position of said first lever (11) and said first position of said cover portion (10) correspond to a reset position, and said second stable position of said first lever (11) and said second stable position of said cover portion (10) correspond to a working position.

7. Wheelguard according to one of claims 1 to 6, wherein said sensor carrier (5) is a bar-shaped member being on one end thereof fixedly connected to said connection rod (17) and carrying on the other end thereof said wheel sensor (26).

8. Wheelguard according to one of claims 1 to 7, wherein said wheel sensor (26) is an ultrasonic sensor.

9. Wheelguard according to claim 6, wherein in said working position said cover portion (10) partly covers said vehicle wheel (5) to be examined.

10. Wheelguard according to claim 1, wherein the movement of said wheel sensor (26) corresponds to a predetermined spatial trajectory (27) resulting from said rotation of said first lever (11) from its first stable position to its second stable position and said rotation of said sensor carrier (25) according to said predetermined angle.

11. Wheelguard according to claim 10, wherein said spatial trajectory (27) of said wheel sensor (26) results from said rotation of said first lever (11) superimposed by said rotation of said sensor carrier (25) according to said predetermined angle, performed simultaneously.

12. Wheelguard according to any of claims 1 to 11, wherein said wheel sensor (26) generates sensor signals indicative of the vehicle wheel (5) to be examined, and the sensor signals being fed to a central control means (28) included in said wheel balancing apparatus (2).

13. Wheelguard according to one of claims 1 to 12, further comprising a driving member (16) pivotally connected to said first lever (11) for rotating said first lever (11) about the pivot axis (15) of said bearing member (14).

## Patentansprüche

1. Radschutz (1) für eine Rad-Auswuchtvorrichtung (2) zum Auswuchten eines Fahrzeugrades (5), wobei der Radschutz (1) enthält:
ein Lagerelement (14) zum schwenkbaren Abstützen eines ersten Hebels (11) zum Ermöglichen einer Drehbewegung desselben zwischen einer ersten und einer zweiten stabilen Position des ersten Hebels (11);
einen Stützrahmen (18), der mit dem ersten Hebel (11) fest verbunden ist und eine Verbindungsstange (17) schwenkbar abstützt,
einen Sensorträger (25), der einen Radsensor (26) zum Abtasten des Fahrzeugrades (5) enthält, wobei der Sensorträger fest mit einem Ende der Verbindungsstange (17) verbunden ist,
eine Stabanordnung (12, 13), von der ein Ende mit einem ersten Verbindungspunkt (P1) verbunden ist, der eine feste Positionsbeziehung zu dem Lagerelement (14) aufweist, und das andere Ende fest mit dem anderen Ende der Verbindungsstange (17) verbunden ist,
wobei die Stabanordnung (12, 13) den Sensorträger (25) entsprechend einem vorbestimmten Winkel dreht, wenn sich der erste Hebel (11) von der ersten stabilen Position zu der zweiten stabilen Position desselben dreht, und der Fahrzeugsensor (26) das Fahrzeugrad (5) abtastet, wenn der Sensorträger (25) entsprechend dem vorbestimmten Winkel gedreht wird.

2. Radschutz nach Anspruch 1,
wobei die Stabanordnung (12, 13) einen zweiten Hebel (12) beinhaltet, der schwenkbar mit dem ersten Verbindungspunkt (P1) verbunden ist, und einen dritten Hebel (13), der schwenkbar mit dem zweiten Hebel an einem zweiten Verbindungspunkt (P2) verbunden ist und fest an einem dritten Verbindungspunkt (P3) mit der Verbindungsstange (17) verbunden ist.

3. Radschutz nach Anspruch 1,
wobei der Stützrahmen (18) den Sensorträger (25) und die Stabanordnung (12, 13), die über die Verbindungsstange (17) verbunden sind, schwenkbar abstützt, und wobei die Drehung des Sensorträgers (25) entsprechend dem vorbestimmten Winkel eine Bewegung relativ zu dem Stützrahmen (18) ist.

4. Radschutz nach einem der Ansprüche 1 bis 3,
wobei die Drehung des Sensorträgers (25) eine durch die Verbindungsstange (17) definierte Drehung um eine Drehachse (8) ist, wobei die Drehachse parallel zu der Schwenkachse (15) des ersten Hebels (11) ist.

5. Radschutz nach Anspruch 1,
ferner beinhaltend einen Abdeckabschnitt (10), der verschiebbar in dem Stützrahmen (18) abgestützt ist zum Ausführen einer Gleitbewegung zwischen einer ersten und einer zweiten stabilen Position desselben.

6. Radschutz nach Anspruch 1 oder 5,
wobei die erste stabile Position des ersten Hebels (11) und die erste Position des Abdeckabschnitts (10) einer Rückstellposition entsprechen, und wobei die zweite stabile Position des ersten Hebels (11) und die zweite stabile Position des Abdeckabschnitts (10) einer Arbeitsposition entsprechen.

7. Radschutz nach einem der Ansprüche 1 bis 6,
wobei der Sensorträger (5) ein stabförmiges Element ist, das an seinem einen Ende fest mit der Verbindungsstange (17) verbunden ist und an seinem anderen Ende den Radsensor (26) trägt.

8. Radschutz nach einem der Ansprüche 1 bis 7,
wobei der Radsensor (26) ein Ultraschall-Sensor ist.

9. Radschutz nach Anspruch 6,
wobei in der Arbeitsposition der Abdeckabschnitt (10) teilweise das zu untersuchende Fahrzeugrad (5) abdeckt.

10. Radschutz nach Anspruch 1,
wobei die Bewegung des Radsensors (26) einer vorbestimmten räumlichen Bahnkurve (27) entspricht, die sich aus der Drehung des ersten Hebels (11) von seiner ersten stabilen Position zu seiner zweiten stabilen Position und der Drehung des Sensorträgers (25) entsprechend dem vorbestimmten Winkel ergibt.

11. Radschutz nach Anspruch 10,
wobei sich die räumliche Bahnkurve (27) des Radsensors (26) ergibt aus der Drehung des ersten Hebels (11) überlagert durch die Drehung des Sensorträgers (25) entsprechend dem vorbestimmten Winkel, die gleichzeitig durchgeführt werden.

12. Radschutz nach einem der Ansprüche 1 bis 11,
wobei der Radsensor (26) Sensorsignale erzeugt, die auf das zu untersuchende Fahrzeugrad (5) hindeuten, und wobei die Sensorsignale einer zentralen Steuereinrichtung (28) zugeführt werden, die in der Rad-Auswuchtvorrichtung (2) enthalten ist.

13. Radschutz nach einem der Ansprüche 1 bis 12,
ferner ein Antriebselement (16) beinhaltend, das schwenkbar mit dem ersten Hebel (11) verbunden ist zum Rotieren des ersten Hebels (11) um die Schwenkachse (15) des Lagerelements (14).

## Revendications

1. Garde roue (1) pour un dispositif (2) d'équilibrage de roue pour équilibrer une roue (5) de véhicule, le garde roue (1) comprenant :
un élément (14) de palier pour supporter à pivotement un premier levier (11) afin d'en permettre un mouvement de rotation entre une première et une deuxième position stable du premier levier,
un bâti (18) de support, relié fixement au premier levier (11) et supportant à pivotement une barre (17) de liaison,
un porte-capteur (25) comprenant un capteur (26) de roue pour détecter la roue (5) du véhicule, le porte-capteur étant relié de manière fixe à une extrémité de la barre (17) de liaison,
une tringlerie (12, 13) dont une extrémité est reliée à un premier point (P1) de liaison ayant une relation de position fixe par rapport à l'élément (14) de palier et dont l'autre extrémité est reliée de manière fixe à l'autre extrémité de la barre (17) de liaison,
dans lequel la tringlerie (12, 13) tourne autour du porte-capteur (25) d'un angle déterminé à l'avance lorsque le premier levier (11) passe en tournant de sa première position stable à sa deuxième position stable et le capteur (26) de véhicule détectant la roue (5) de véhicule lorsque l'on fait tourner le porte-capteur (25) de l'angle déterminé à l'avance.

2. Garde roue suivant la revendication 1, dans lequel la tringlerie (12, 13) comprend un deuxième levier (12) relié en pivot au premier point (P1) de liaison et un troisième levier (13) relié en pivot au deuxième levier en le deuxième point (P2) de liaison et relié fixement en un troisième point (P3) de liaison à la barre (17) de liaison.

3. Garde roue suivant la revendication 1, dans lequel le bâti (18) de support supporte à pivotement le porte-capteur (25) et la tringlerie (12, 13) reliée par la barre (17) de liaison, et la rotation du porte-capteur (25) suivant l'angle déterminé à l'avance est un mouvement par rapport au bâti (18) de support.

4. Garde roue suivant l'une des revendications 1 à 3, dans lequel la rotation du porte-capteur (25) est une rotation autour d'un axe (8) de rotation défini par la barre (17) de liaison, l'axe de rotation étant parallèle à l'axe (15) de pivot du premier levier (11).

5. Garde roue suivant la revendication 1, comprenant en outre une partie (10) de couvercle, supportée coulissante dans le bâti (18) de support, pour effectuer un mouvement de coulissement entre une première et une deuxième position stable de celle-ci.

6. Garde roue suivant la revendication 1 ou 5, dans lequel la première position stable du premier levier (11) et la première position de la partie (10) de couvercle correspondent à une position de remise à l'état initial et la deuxième position stable du premier levier (11) et la deuxième position stable de la partie (10) de couvercle correspondent à une position de travail.

7. Garde roue suivant l'une des revendications 1 à 6, dans lequel le porte-capteur (5) est un élément en forme de barre, qui est relié de manière fixe en l'une de ses extrémités à la barre (17) de liaison et qui porte à son autre extrémité le capteur (26) de roue.

8. Garde roue suivant l'une des revendications 1 à 7, dans lequel le capteur (26) de roue est un capteur à ultrason.

9. Garde roue suivant la revendication 6, dans lequel dans la position de travail la partie (10) de couvercle recouvre en partie la roue (5) de véhicule à examiner.

10. Garde roue suivant la revendication 1, dans lequel le mouvement du capteur (26) de roue correspond à une trajectoire (27) dans l'espace déterminée à l'avance provenant de la rotation du premier levier (11) de sa première position stable à sa deuxième position stable et à la rotation du porte-capteur (25) suivant l'angle déterminé à l'avance.

11. Garde roue suivant la revendication 10, dans lequel la trajectoire (27) dans l'espace du capteur (26) de roue provient de la rotation du premier levier (11) superposé à la rotation du porte-capteur (25) suivant l'angle déterminé à l'avance, effectuées simultanément.

12. Garde roue suivant l'une des revendications 1 à 11, dans lequel le capteur (26) de roue produit des signaux de capteur indicateurs de la roue (5) de véhicule à examiner, et les signaux de capteur sont envoyés à un moyen (28) central de commande inclus dans le dispositif (2) d'équilibrage de roue.

13. Garde roue suivant l'une des revendications 1 à 12, comprenant en outre un élément (26) d'entraînement relié à pivotement au premier levier (11), pour faire tourner le premier levier (11) autour de l'axe (15) de pivot de l'élément (14) de palier.
